# EUROPEAN PATENT SPECIFICATION

(11) **EP 4 464 396 B1**
(45) Date of publication and mention of the grant of the patent: **03.12.2025**
(21) Application number: 24187867.7
(22) Date of filing: 27.09.2021
(51) Int. Cl.: B01D 46/10, B01D 46/52

(54) **FILTER ELEMENT**
FILTERELEMENT
ÉLÉMENT FILTRANT

(30) Priority: 29.09.2020 US 202063084588 P; 14.12.2020 US 202063124931 P
(43) Date of publication of application: 20.11.2024
(62) Divisional of application: 21795146.6
(73) Proprietor: Parker-Hannifin Corporation, Cleveland, OH 44124-4141 (US)
(72) Inventor: KRULL, Timothy L, Kearney Nebraska, 68845 (US)
(74) Representative: Murgitroyd & Company

(56) References cited:
- US-A- 6 159 260
- US-A1- 2005 166 561
- US-A1- 2010 126 129
- US-A1- 2020 072 169

## Description

### TECHNICAL FIELD

The present invention relates to a filter element for use in an air filter assembly.

### BACKGROUND

Air filter assemblies are used in automotive and industrial applications for the purpose of filtering air for use in downstream systems. Unfiltered fluids, such as air, entering a system often contain contaminants and particulates that may be harmful, or at least inefficient, for use by downstream components and machinery. Thus, it can be important to filter as much of the contaminants and particulate matter out of the air stream as possible.

Filters or filter elements are typically mounted in the filter housings of the air filter assemblies and define the flow path of the air stream through the housing. Inlet air enters an upstream end of the filter element and exits at an opposing, downstream end. The filter elements support a filter media pack, such as a pleated panel filter, within a shell or frame. As the inlet air passes through the filter media pack, the filter media removes or at least reduces the contaminants and particulates in the air. After a period of use, the filter media typically becomes spent or saturated, which usually then requires removal of the filter element for cleaning or replacement.

As a removable element, the filter element is known to have a gasket or seal at its downstream end to create an air-tight seal between the filter element and the outlet of the housing of the filter assembly. Such a seal is important to prevent unfiltered air from leaking around or bypassing the filter element and thus entering the downstream system without having passed through the media. Such a seal can be provided as a separate gasket supported and/or adhesively fixed within a channel at the outer end of the frame of the filter element, and/or as a form-in-place urethane component around the outer end of the element. Due to the location of the downstream seal, the structure of the frame of the filter element, and the available volume within the housing of the filter assembly, the downstream seal is relatively easy to create and apply to the pack to provide an appropriate seal against the housing.

Filter elements are also known to have seals between the filter media pack and the frame of the filter element. If the filter media is not sealed within the filter element, the same issue of unfiltered air leaking or bypassing around the filter media and into the downstream system can occur. The seals within the filter element assembly can be more of a challenge to create than the seal between the element and the housing, as there is limited space within the frame of the element, and the location of the seal adjacent the frame can reduce the effective flow area through the media.

One technique has been to use adhesive to seal the edges of the filter media to the frame of the filter media pack. The adhesive seal can require a complicated frame structure, specialized dispensing equipment, and can be a challenge to replicate so that an effective seal is provided around the entire frame. The adhesive seal also often needs to be fixtured in position while the adhesive cures - which can result in slower manufacturing rates.

As such, it is believed there is a need for a filter element with an improved sealing structure between the filter media and the frame of the filter element, particularly at the upstream end of the media pack, which provides a consistent, robust seal around the frame of the filter element, and reduces the manufacturing time and complexity associated with the filter element.

The following documents may provide technical background to the present disclosure: US2010/126129A1; US6159260A; US2005/166561A1; and US2020/072169A1.

### SUMMARY

A novel filter element is provided having an improved sealing structure between the filter media and the frame of the filter element, which is particularly advantageous at the upstream end of the filter element. The improved sealing structure combines adhesive and mechanical retention techniques, and as such, provides a consistent, robust seal around the entire frame of the filter element, and which reduces the manufacturing time and complexity associated with the filter element.

The claimed invention provides a filter element as defined in appended claim 1. Optional features are defined in the appended dependent claims.

The filter element as described provides an air-tight seal between the filter media and the frame of the filter element at the upstream end of the filter element to ensure unfiltered air does not leak around or bypass the filter media, and to thus ensure contaminants and particulate are not carried by the air flow to downstream components. The seal bars create a sealed interface that is held together by mechanical and adhesive means, thus improving the reliability of the sealed interface. Further, the design simplifies the manufacturing process and increases the manufacturing speed. Overall, an improved sealing structure between the filter media and the frame of the filter element, particularly at the upstream end of the element, is provided which provides a consistent, robust seal, and which reduces manufacturing time and complexity associated with the filter element.

### BRIEF DESCRIPTION OF THE DRAWINGS

Examples of the embodiment of this invention will now be described in further detail with reference to the accompanying drawings, in which:
FIG. 1 is a side view of an air filter assembly for the filter element of the present invention;
FIG 2. is an elevated perspective view of one example of a filter element for the air filter assembly of FIG.1;
FIG. 3 is an elevated perspective view of the frame of the filter element of FIG. 2;
FIG. 4 is a cross-sectional side view of the filter element of FIG. 2, taken substantially along the plane defined by the lines 4-4 in FIG 2;
FIG. 5 is a cross-sectional end view of the filter element of FIG. 2, taken substantially along the plane defined by the lines 5-5 in FIG 2;
FIG. 6 is an enlarged cross-sectional end view of a portion of the filter element of FIG. 5; and
FIG. 7 is an elevated perspective view of another example of the filter element constructed according to the principles of the present invention.

### DETAILED DESCRIPTION

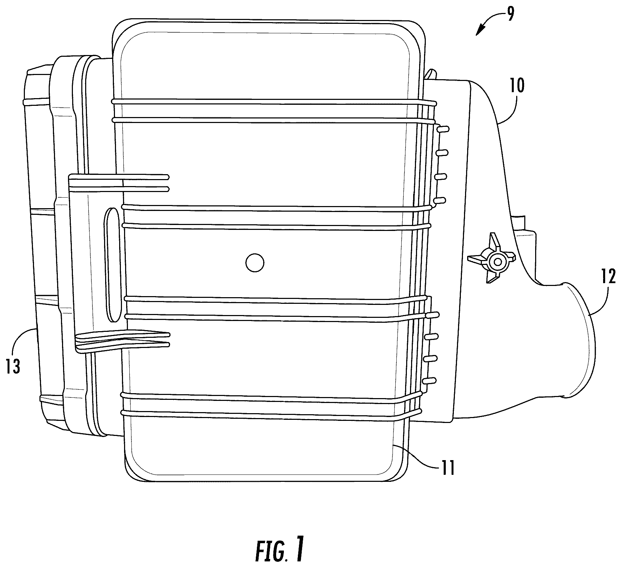

Referring initially to FIG. 1, a side view of a filter assembly appropriate for a filter element of the present invention is indicated generally at **9.** The filter assembly generally includes a housing **10** with a hinged cover **11,** an air outlet **12** and an air inlet **13.** The filter assembly is generally referred to as a "side entry" air filter, as a filter media pack is introduced into the side of the filter housing for use. While one specific example of an air filter housing is shown, it should be appreciated that such example is only for illustration purposes, and the filter element of the subject invention could be used with other housing configurations.

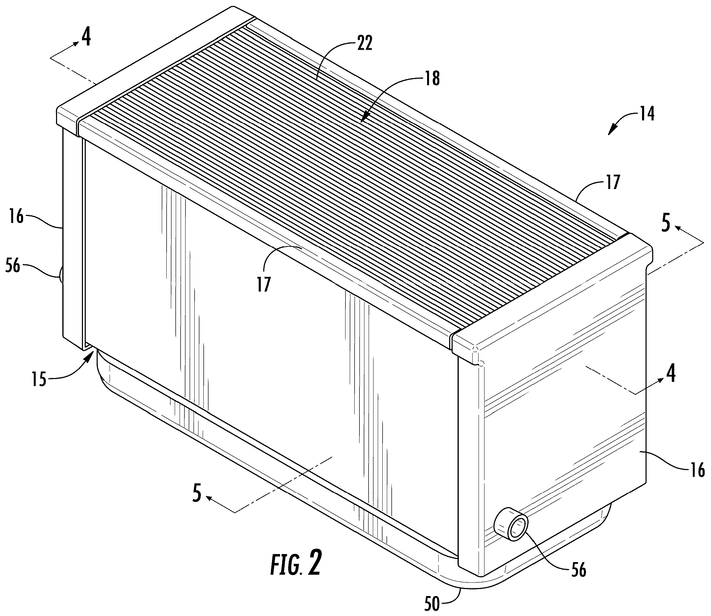

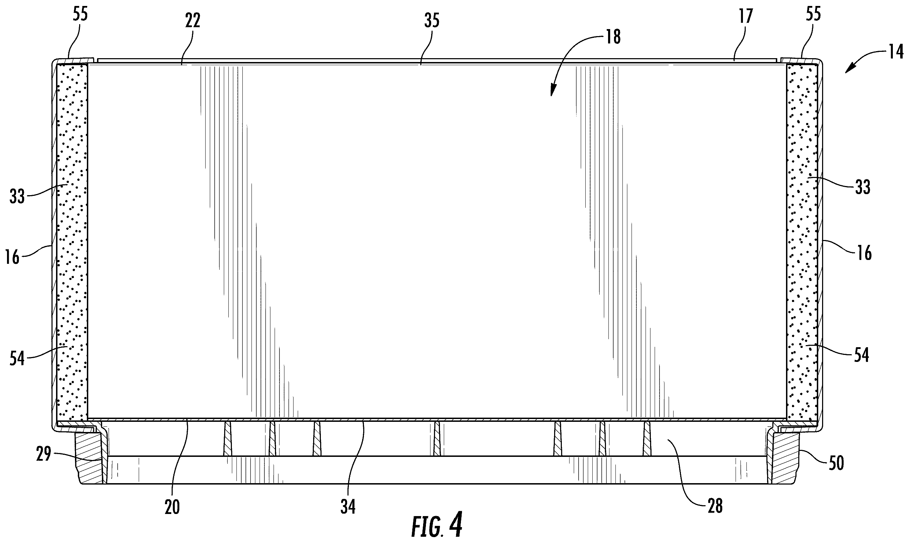

Referring now to FIG 2, a perspective illustration of one example of a filter element, indicated generally at **14,** is shown, for the air filter housing of FIG. 1. The filter element **14** generally comprises a frame, indicated generally at **15,** a pair of end caps **16,** a pair of seal bars **17,** and filter media, indicated generally at **18.** The filter element **14** has a downstream outflow end **20** (FIG. 4) and an upstream inflow end **22,** which in part define the airflow path through the filter element **14** and through the filter media **18.**

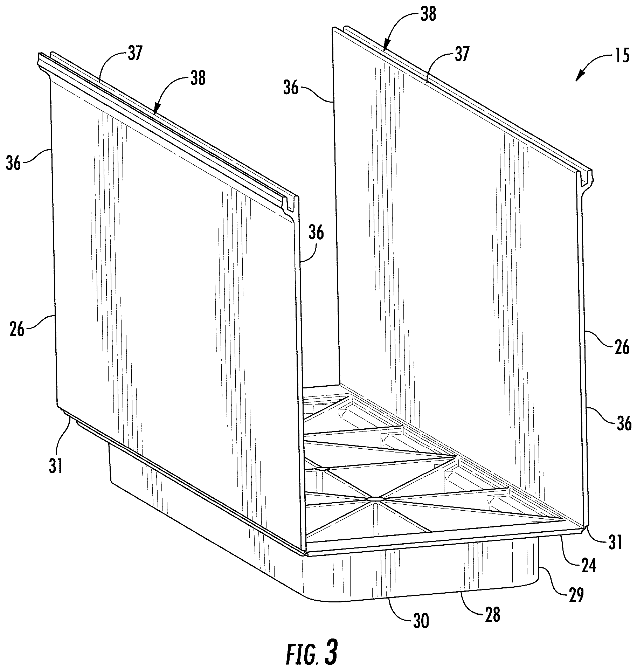

The frame **15** of the filter element **14** is shown in more detail in FIG. 3. The frame **15** comprises an outlet panel **24** and two solid side panels **26,** preferably formed of plastic or other appropriate lightweight, inexpensive material. The outlet panel **24** defines the outflow end **20** of the filter element **14.** In this example, the outlet panel **24** is substantially rectangular, although other geometries are possible. The outlet panel **24** has a cross-brace ribbing **28** that allows for the passage of air through the outlet panel **24** while also helping to secure and support the filter media in place and to prevent the filter media from protruding through the outlet panel **24** while also protecting the media from damage caused by deformation. The outlet panel **24** also has a gasket support section **29** with an outwardly-facing attachment surface **30.** The gasket attachment surface **30** surrounds the cross-brace ribbing and is slightly inset from the outer perimeter of the outlet panel **24.**

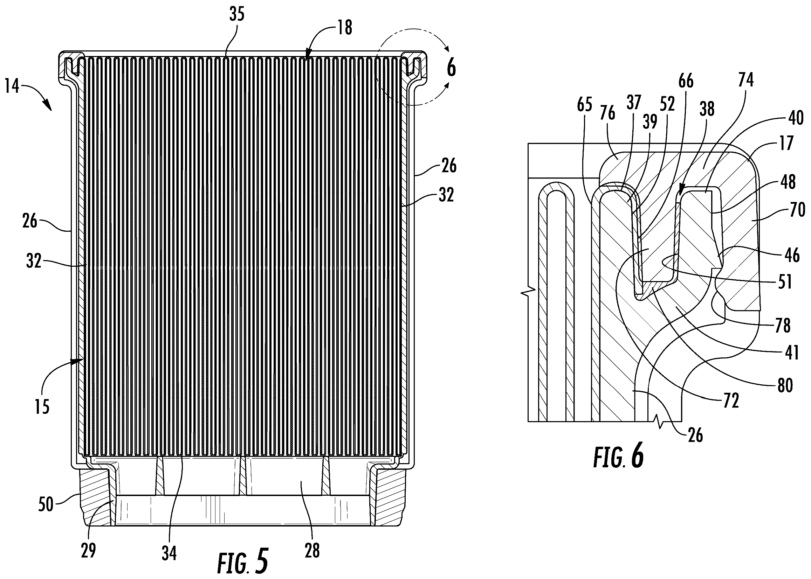

The side panels **26** in one example can have a rectangular configuration, with the inner edge of the panels **26** attached along the opposite side edges of the outlet panel **24.** In this example, the side panels **26** are attached via a living (unitary) hinge **31** along the opposing side edges of the outlet panel **24.** The living hinge **31** may have a reduced thickness relative to one or both of the outlet panel **24** and adjacent side panel **26.** To facilitate assembly of the filter element, the panels can be folded flat, and the media located against the outlet panel **24.** The side panels can then be folded up along the sides of the media. When the filter element **14** is fully assembled, the side panels **26** of the frame **15** extend substantially perpendicular to the outlet panel **24** and against the opposing sides of the media, as shown in FIG. 2 and FIG. 5. Alternatively, the side panels could be rigidly fixed to the outlet panel forming a generally U-shaped configuration and the media can be slid between the side panels until the media is abutting the outlet panel **24.** In this example, the side panels could be provided unitary with the outlet panel **24,** such as being molded in one piece, or could be provided as separate components and fixed such as with adhesive or other appropriate techniques. In any event, when assembled, the frame **15** has a substantially U-shaped configuration. In one example, the side panels **26** are molded in a planar orientation relative to outlet panel **24** and then folded upward during the assembly process, e.g. after the filter media has been placed adjacent the outlet panel **24.**

The filter media **18** can be a panel-type filter media of cellulose, polymer or other media appropriate for the particular application, and can be assembled in one or more layers of material. The media can be pleated, such as being formed in a pleating machine to have a plurality of pleats located in adjacent, surface-to-surface relation with one another to form a tight rectangular pack, with parallel sides **32,** parallel ends **33** and parallel upstream inlet and downstream outlet faces **35, 34,** respectively, as shown in FIG. 4 and 5. The media can be a single sheet of filter media folded to form a plurality of panels, a block of fluted media formed from a corrugated layer attached to a facer sheet, or other block-type media. One pleated panel media appropriate for the filter media pack is illustrated and described in USPN 10,357,731, which is incorporated herein by reference. The packed pleats are located within the frame **15** with the outlet face **34** of the media preferably supported against the cross ribs **28** of the outlet panel **24,** and with the flat outer side pleats **32** of the media supported by and against the side panels **26** of the frame. The ends **33** of the media are preferably flush with the end edges **36** (FIG. 3) of the panels **26,** while the inlet face **35** is preferably flush with the distal side edges **37** of the panels **26.** The pleats of the media thus extend parallel to the side panels **26** of the frame **15.**

As shown in FIGS. 2 and 4-5, a preformed gasket **50** of urethane or other appropriate resilient material, surrounds and is attached, such as with adhesive, to the gasket attachment surface **30** of gasket support section **29.** The gasket **50** promotes a secure and air-tight seal of the filter element **15** to the outlet of the filter assembly at the outflow end **20.** Other forms and material for a seal at the downstream end of the filter element could be used, as should be apparent to one of ordinary skill in the art.

Referring now to FIG. 3 and 6, the side edge **37** of one, and preferably both side panels **26** has a substantially U-shaped end, defining a media anchor channel, indicated generally at 38. The media anchor channel has an interior rounded wall **39,** parallel exterior wall **40** and inner or bottom end wall **41.** In the present example, the interior wall **39** is flush with and forms the distal end of the side panel **26** of the frame **15.** In other examples, the side panel **26** could be flush with the exterior wall **40** of the channel, or the panel could intersect the bottom wall **41** between the interior and exterior walls **39, 40.** In any event, the media anchor channel **38** preferably extends the entire length of the side edge **37** of the panel from one end to the other.

At least one, and preferably both media anchor channels **38** can also have a snap-tab **46** located on an external surface **48** of the exterior wall **40** of the media anchor channel **38,** the reason for which will be described more fully below. The snap-tab 46 extends along at least a portion, and preferably along the entire channel **38** from one end of the side panel to the other. In other examples, the snap-fit tab **46** may be located on the interior surface **51** of the external wall **40,** and/or on the interior surface **52** of interior wall **39** of the media anchor channel **38.**

Referring now to Figures 2 and 4, the end caps **16** of the media pack are each fixed to the frame **15** at the opposing open end faces **33** of the media. The end caps **16** can be formed from plastic or other appropriate lightweight, inexpensive material, and are potted with urethane **54** or other appropriate adhesive to promote a secure and air-tight seal on the frame **15** and against the ends of the filter media **18.** As a result, air passing from the inflow end **22** of the filter element is forced to pass axially downstream through an open pleat end between adjacent pleats, laterally through a pleat of the media, and then axially downstream between other adjacent pleats through an open pleat at the outlet end **20** of the filter media **18,** thus filtering the air.

Each end cap **16** can have short skirt portion as at **55** (FIG. 4), which receives the end of the media, and facilitates locating and securing the end cap to the media. Each end cap **16** can also have an outwardly-projecting end cap projection **56** (FIG. 2), which in one example, can be a cylindrical or annular projection. The end cap projections **56** serve as locating features when the filter element **14** is installed into the filter assembly. The filter assembly has a cooperative recess (not shown in FIG. 1) that locates and receives the end cap projection **56** to securely position and seal the filter media pack **14** within the filter assembly. The end cap projection **56** can have an appropriate geometry and can be located on the end cap **16** as appropriate for a particular design or application.

Referring again to FIG. 6, the outermost pleat **65** of the media located against each side panel **26** has a distal side edge **66** extending across the width of the media. The media side edge **66** is located so as to extend around and over the rounded end of the interior wall **39** of the media anchor channel **38** and at least partially into the media anchor channel **38.** Preferably the media edge **66** extends along the interior surface **52** of the interior wall **39** to, or substantially to, the bottom wall **41** of the channel.

The side edges **66** of the media are secured and sealed to the frame **15.** To this end, a bead or strip of adhesive **80** can be applied along the media anchor channel **38,** either before or after the side edge **66** of the media is located in the channel. Subsequently, a seal bar **17** is pressed into each channel. Alternatively, the bead of adhesive could be applied to the seal bar before it is pressed into the channel. The seal bars **17** are each U-shaped in cross-section, and can be pre-formed from an appropriate material, such as plastic or other lightweight, inexpensive material. As can be seen, when inverted, the shape of the seal bar **17** compliments the shape of the media anchor channel **38** such that the seal bars can be pressed into and closely received in a respective media anchor channel. In this example, the seal bar **17** has a substantially U-shaped configuration, with an exterior side wall **70,** a parallel interior side wall **72,** and an end wall **74,** defining a seal bar channel. A short flange **76** can extend laterally from the end wall **74** perpendicular to the side walls **70,72,** and across the end of the interior wall **39** of the media anchor channel **38.** The flange **76** can have an inside surface substantially matching the rounded configuration of the end of the interior wall **39.** The exterior side wall **70** can further include a snap-tab **78** extending along at least a portion, and preferably along the entire length of the wall, and toward the outer distal edge thereof.

With the side edge **66** of the filter media **18** received within the media anchor channel **38,** the seal bar **17** is inverted, and forced into the media anchor channel **38** such that the u-shapes of the bar and the channel interlock. The interior wall **72** of the seal bar is closely received between the interior wall **39** and exterior wall **40** of the media anchor channel **38.** The outer wall **70** of the seal bar is closely received along the outer wall **40** of the media anchor channel, such that the snap-tab **78** of the seal bar **17** engages the snap-tab **46** of the media anchor channel **38** to secure the seal bar within the channel. The side edge **66** of the media is captured between the inner wall **39** on the media anchor channel and inner wall **72** and flange **76** of the seal bar.

While both seal bars and channels are shown having a snap-tab engagement, it is possible such snap-tabs could be used with only one of the seal bar/channel engagements, with the media sealed to the frame along its other side using another technique; or that one or both of the seal bar/channel engagements could have other interengaging locking geometry or structure, such as ridges, tabs, or simply a friction or interference fit, to mechanically retain the seal bar(s) within the respective channel when assembled.

In other examples, the seal bar **17** may be received within the channel **38** such that the exterior wall **70** of the seal bar is received between the inner and outer walls **39, 40** of the channel **38,** and the interior wall **72** of the seal bar located against an inner wall surface of the inner wall **39** of the media anchor channel. The snap-tabs **46, 78** could thereby be located on the interior surface **51** of the outer wall **40** on the media anchor channel **38,** and the outer surface of the exterior wall **70** of the seal bar. Or the seal bar could have a T-shape or other configuration, such that only one wall of the seal bar is received within the media anchor channel **38,** and the locking feature is located on one (or both) surfaces of the wall.

In any event, the seal bars **17** are each mechanically held within a media anchor channel **38,** and extend along most if not the entire length of the media anchor channel **38** between the end caps **16,** with the outer surface of the seal bars being substantially flush with the outer surface of the end edges of the end cap. Alternatively, the end caps **16** could be configured to receive the ends of the seal bars **17,** with the seal bars thereby extending most if not all of the distance along the channel **38** between the ends **36** of the side panels.

The mechanical forces between the seal bar **17** and channel **38** retain the side edge **66** of the media within the media locking channel, and allow the adhesive **80** to cure and sealingly fix the media to the frame, without the use of specialized equipment and fixtures to hold the frame **15** and filter media **18** in place. The side edge **66** of the media is thus effectively and efficiently sealed along its entire length to the frame **15** within the media anchor channel **38** by the cooperation of the seal bar **17,** the adhesive bead **80,** and in at least some examples, the end caps **16.** This advantageously allows other manufacturing steps to occur while the adhesive is curing, or at least movement of the filter element without concern of compromising the adhesive seal between the media and the frame of the filter element. This simplifies the manufacturing process and can increase the manufacturing speed and efficiency.

Again, as described previously, having such a sealed interface between the side edges of the media and frame of the element prevents unfiltered air from leaking or bypassing around the edges **66** of the filter media **18** and passing as a dirty air stream to downstream components.

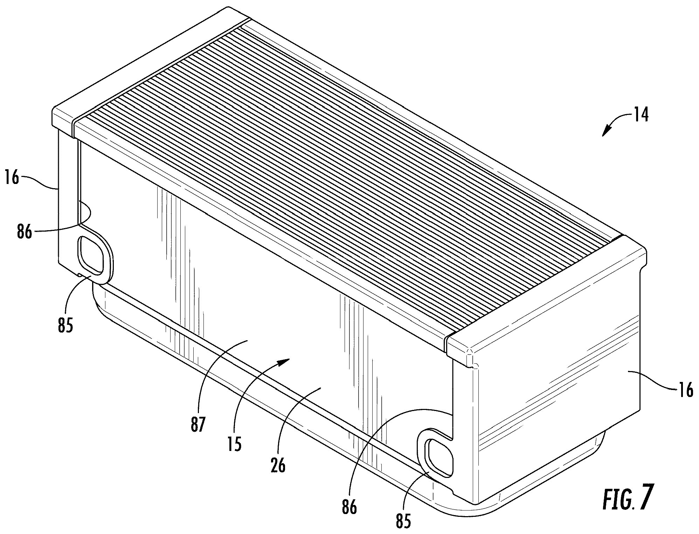

Finally, as shown in FIG. 7, a further feature of the filter element **14** is illustrated, where the end caps **16** can also each have a flexible removal loop **85.** The loops can be unitary with the end caps or formed separately and attached such as the potting compound used between the end caps and media. The flexible removal loops **85** extend from a side edge **86** of the end cap **16** and across a portion of the exterior surface **87** of one of the side panels **26** of the frame **15.** The removal loops **85** can be grabbed by a user to facilitate the installation and removal of the filter element **14** from the filter housing.

As such, the filter element as describe above provides an air-tight seal between the filter media and the frame of the filter element, particularly at the upstream end of the filter element, to ensure unfiltered air does not leak around or bypass the filter media, and to thus ensure contaminants and particulate are not carried by the air flow to downstream components. A sealed interface is provided between the pleated media and the frame of the filter element that is created by both adhesive and mechanical forces, thus improving the reliability of the sealed interface. Overall, an improved upstream sealing structure between the filter media and the frame of the filter element is created which provides a consistent, robust seal, and which reduces manufacturing time and complexity associated with the filter element.

## Claims

1. A filter element (14), comprising:
a. a frame (15) having a pair of side panels (26), at least one of the side panels (26) having a media anchor channel (38) along a distal side edge (37) of the one side panel;
b. filter media (18) supported within the frame (15), the filter media (18) including side edges (66) along opposite sides of the media, one of the media side edges (66) being at least partially received within the media anchor channel (38);
c. adhesive means (80) along the media anchor channel (38) for adhesively sealing the media side edge (66) within the media anchor channel (38); and,
d. a seal bar (17) having a configuration that cooperates with the media anchor channel (38) to mechanically retain the media side edge (66) in the media anchor channel (38).

2. The filter element (14) of claim 1, further including locking means (46, 78) for mechanically retaining the seal bar (17) within the media anchor channel (38).

3. The filter element (14) of claim 2, wherein the media anchor channel (38) has an interior wall (39) and parallel exterior wall (40), and the media side edge (66) extends around and over the interior wall (39) of the media anchor channel and at least partly into the media anchor channel (38).

4. The filter element (14) of claim 3, wherein the filter media (18) is a pleated panel filter media.

5. The filter element (14) of claim 4, further comprising a pair of end caps (16), each end cap (16) fixed to a respective end of the frame (15) such that each end cap (16) seals against an associated end face (33) of the filter media.

6. The filter element (14) of claim 5, wherein the seal bar (17) has a pair of walls (70, 72) defining a U-shaped configuration, with one of the walls (72) of the seal bar closely received within the media anchor channel (38).

7. The filter element (14) of claim 6, wherein the adhesive means (80) is a bead of adhesive (800, and wherein the bead of adhesive (80) is located between the media anchor channel (38) and the one wall (72) of the seal bar (17).

## Patentansprüche

1. Ein Filterelement (14), das Folgendes beinhaltet:
a. einen Rahmen (15), der ein Paar von Seitenplatten (26) aufweist, wobei mindestens eine der Seitenplatten (26) einen Medienverankerungskanal (38) entlang einer distalen Seitenkante (37) der einen Seitenplatte aufweist;
b. Filtermedien (18), die innerhalb des Rahmens (15) gehalten werden, wobei die Filtermedien (18) Seitenkanten (66) entlang gegenüberliegenden Seiten der Medien umfassen, wobei eine der Medienseitenkanten (66) zumindest teilweise innerhalb des Medienverankerungskanals (38) aufgenommen ist;
c. Klebemittel (80) entlang des Medienverankerungskanals (38) zum klebenden Abdichten der Medienseitenkante (66) innerhalb des Medienverankerungskanals (38); und
d. eine Dichtungsleiste (17), die eine Konfiguration aufweist, die mit dem Medienverankerungskanal (38) zusammenwirkt, um die Medienseitenkante (66) in dem Medienverankerungskanal (38) mechanisch festzuhalten.

2. Filterelement (14) gemäß Anspruch 1, das ferner Verriegelungsmittel (46, 78) zum mechanischen Festhalten der Dichtungsleiste (17) innerhalb des Medienverankerungskanals (38) umfasst.

3. Filterelement (14) gemäß Anspruch 2, wobei der Medienverankerungskanal (38) eine Innenwand (39) und eine parallele Außenwand (40) aufweist und die Medienseitenkante (66) sich um und über die Innenwand (39) des Medienverankerungskanals und zumindest teilweise in den Medienverankerungskanal (38) erstreckt.

4. Filterelement (14) gemäß Anspruch 3, wobei das Filtermedium (18) ein plissiertes Plattenfiltermedium ist.

5. Filterelement (14) gemäß Anspruch 4, das ferner ein Paar Endkappen (16) beinhaltet, wobei jede Endkappe (16) an einem jeweiligen Ende des Rahmens (15) befestigt ist, so dass jede Endkappe (16) gegen eine zugehörige Endfläche (33) des Filtermediums abdichtet.

6. Filterelement (14) gemäß Anspruch 5, wobei die Dichtungsleiste (17) ein Paar Wände (70, 72) aufweist, die eine U-förmige Konfiguration definieren, wobei eine der Wände (72) der Dichtungsleiste eng in dem Medienverankerungskanal (38) aufgenommen ist.

7. Filterelement (14) gemäß Anspruch 6, wobei das Klebemittel (80) eine Klebstoffraupe (800) ist und wobei die Klebstoffraupe (80) zwischen dem Medienverankerungskanal (38) und der einen Wand (72) der Dichtungsleiste (17) angeordnet ist.

## Revendications

1. Un élément filtrant (14), comprenant :
a. un châssis (15) ayant une paire de panneaux latéraux (26), au moins l'un des panneaux latéraux (26) ayant un canal d'ancrage de média (38) le long d'un bord latéral distal (37) de l'un panneau latéral ;
b. un média filtrant (18) soutenu au sein du châssis (15), le média filtrant (18) incluant des bords latéraux (66) le long de côtés opposés du média, l'un des bords latéraux de média (66) étant au moins partiellement reçu au sein du canal d'ancrage de média (38) ;
c. un moyen adhésif (80) le long du canal d'ancrage de média (38) pour sceller de façon adhésive le bord latéral de média (66) au sein du canal d'ancrage de média (38) ; et,
d. une mâchoire de scellement (17) ayant une configuration qui coopère avec le canal d'ancrage de média (38) afin de retenir de façon mécanique le bord latéral de média (66) dans le canal d'ancrage de média (38).

2. L'élément filtrant (14) de la revendication 1, incluant en outre des moyens de verrouillage (46, 78) pour retenir de façon mécanique la mâchoire de scellement (17) au sein du canal d'ancrage de média (38).

3. L'élément filtrant (14) de la revendication 2, dans lequel le canal d'ancrage de média (38) a une paroi intérieure (39) et une paroi extérieure (40) parallèle, et le bord latéral de média (66) se prolonge autour et par-dessus la paroi intérieure (39) du canal d'ancrage de média et au moins partiellement dans le canal d'ancrage de média (38).

4. L'élément filtrant (14) de la revendication 3, dans lequel le média filtrant (18) est un média filtrant en panneau plissé.

5. L'élément filtrant (14) de la revendication 4, comprenant en outre une paire de couvercles d'extrémité (16), chaque couvercle d'extrémité (16) étant fixé à une extrémité respective du châssis (15) de telle sorte que chaque couvercle d'extrémité (16) est scellé contre une face d'extrémité (33) associée du média filtrant.

6. L'élément filtrant (14) de la revendication 5, dans lequel la mâchoire de scellement (17) a une paire de parois (70, 72) définissant une configuration en forme de U, l'une des parois (72) de la mâchoire de scellement étant reçue de façon étroite au sein du canal d'ancrage de média (38).

7. L'élément filtrant (14) de la revendication 6, dans lequel le moyen adhésif (80) est un bourrelet d'adhésif (800, et dans lequel le bourrelet d'adhésif (80) est placé entre le canal d'ancrage de média (38) et l'une paroi (72) de la mâchoire de scellement (17).
